# EUROPÄISCHE PATENTSCHRIFT

(11) **EP 2 158 249 B1**
(45) Veröffentlichungstag und Bekanntmachung des Hinweises auf die Patenterteilung: **13.10.2010**
(21) Anmeldenummer: 08760709.9
(22) Anmeldetag: 09.06.2008
(51) Int. Cl.: C08G 59/00, C08G 59/68, C08L 63/00

(54) **KATALYSATOR FÜR DIE HÄRTUNG VON EPOXIDEN**
CATALYST FOR CURING EPOXIDES
CATALYSEUR POUR LE DURCISSEMENT D'ÉPOXYDES

(30) Priorität: 13.06.2007 EP 07110171
(43) Veröffentlichungstag der Anmeldung: 03.03.2010
(73) Patentinhaber: BASF SE, 67056 Ludwigshafen (DE)
(72) Erfinder: WITTENBECHER, Lars, 68159 Mannheim (DE); HENNINGSEN, Michael, 67227 Frankenthal (DE); DEGEN, Georg, 64653 Lorsch (DE); MAASE, Matthias, New Jersey, 07945 (US); DÖRING, Manfred, 76744 Wörth (DE); ARNOLD, Ulrich, 76646 Bruchsal (DE)
(86) Internationale Anmeldenummer: PCT/EP2008/057140
(87) Internationale Veröffentlichungsnummer: WO 2008/152011

(56) Entgegenhaltungen:
- WO-A-98/37134
- DE-A1- 2 416 408
- US-A- 3 635 894
- YANGYANG SUN ET AL: "Room Temperature Stable Underfill with Novel Latent Catalyst for Wafer Level Flip-Chip Packaging Applications" ELECTRONIC COMPONENTS AND TECHNOLOGY CONFERENCE 2006, 56TH SAN DIEGO, CA MAY 30 - JUNE 2, 2006, PISCATAWAY, NJ, USA,IEEE, 30. Mai 2006 (2006-05-30), Seiten 1905-1910, XP010923719 ISBN: 978-1-4244-0152-9
- DATABASE WPI Week 200725 Thomson Scientific, London, GB; AN 2007-244709 XP002495002 & JP 2006 241139 A (SUMITOMO CHEM CO LTD) 14. September 2006 (2006-09-14)

## Beschreibung

Die Erfindung betrifft die Verwendung von 1, 3 substituierten Imidazoliumsalzen der Formel I 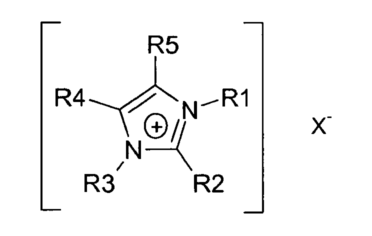 worin
R1 und R3 unabhängig voneinander für einen organischen Rest mit 1 bis 20 C-Atomen stehen
R2, R4,und R5 unabhängig voneinander für ein H-Atom oder für einen organischen Rest mit 1 bis 20 C-Atomen stehen, wobei R4 und R5 auch zusammen einen aliphatischen oder aromatischen Ring ausbilden können, und
X für ein Dicyanamid -Anion steht
als latenter Katalysator für die Härtung von Epoxyverbindungen enthaltenden Zusammensetzungen.

Epoxyverbindungen werden zur Herstellung von Beschichtungen, als Klebstoff, zur Herstellung von Formkörpern und für viele andere Zwecke verwendet. Sie liegen dazu während der Verarbeitung im allgemeinen in flüssiger Form vor ( als Lösungen in geeigneten Lösemitteln oder als flüssige, lösemittelfreie 100 % Systeme. Die Epoxyverbindungen sind im allgemeinen niedermolekular. Bei der Verwendung werden sie gehärtet. Es sind unterschiedliche Möglichkeiten zur Härtung bekannt. Ausgehend von Epoxyverbindungen mit mindestens zwei Epoxygruppen kann mit einer Aminoverbindung oder einer Säureanhydridverbindung mit mindestens zwei Amino- bzw. mindestens einer Anydridgruppe eine Härtung durch eine Polyadditionsreaktion (Kettenverlängerung) erfolgen. Amino- oder Säureanhydridverbindungen mit hoher Reaktivität werden im allgemeinen erst kurz vor der gewünschten Härtung zugesetzt. Es handelt sich daher um sogenannte zweikomponentige (2K) -Systeme.

Weiterhin können Katalysatoren für die Homo- oder Copolymerisation der Epoxyverbindungen verwendet werden. Bekannt sind Katalysatoren, die erst bei hohen Temperaturen aktiv sind (latente Katalysatoren). Derartige latente Katalysatoren haben den Vorteil, dass einkomponentige (1 K) Systeme möglich sind, d.h. die Epoxyverbindungen können die latenten Katalysatoren enthalten, ohne dass es zu einer unerwünschten frühzeitigen Härtung kommt.

Als latente Katalysatoren kommerziell erhältlich sind insbesondere Addukte des Bortrifluorids an Aminen (BF3-Monoethylamin), quaternäre Phosphoniumverbindungen und Dicyandiamid (DICY).

Im Journal of Polymer Science: Polymer Letters Edition, Vol. 21, 633-638 (1983) wird die Verwendung von 1,3-Dialkylimidazoliumsalzen für diesen Zweck beschrieben. Bei ihrer Zersetzung oberhalb 175 °C werden 1-Alkylimidazole freigesetzt, welche dann die Härtung bewirken. Variiert wurde die Struktur des Kations, als Anionen wurden die Halogenide Chlorid und Iodid eingesetzt.

Aus DE-A 2416408 sind Imidazolum-borate, wie Imidazolium-tetraphenylborat oder Imidazolium-tetra n-butylborat bekannt.

US 3 635 894 beschreibt 1,3 Dialkyl-imidazolium-salze mit Anionen, ausgewählt aus Chloriden, Bromiden und Iodiden als latente Katalysatoren für Epoxyverbindungen.

Kowalczyk and Spychaj, Polimery (Warsaw, Poland) (2003), 48(11/12), 833-835 beschreiben die Verwendung von 1-Butyl-3-methyl-imidazolium tetrafluoroborat als latenter Katalysator für Epoxyverbindungen. Die Wirkung des Katalysators setzt erst bei 190°C ein.

Sun, Zhang and Wong, Journal of Adhesion Science and Technology (2004), 18(1), 109-121 offenbaren die Verwendung von 1-Ethyl-3-methyl-imidazoliumhexafluorophosphat als latenter Katalysator. Die Wirkung setzt erst bei 196°C ein.

In JP 2004217859 werden Imidazolium-tetraalkyl-borate oder Imidazolium-dialkyldithiocarbamate verwendet. Die Aktivierung erfolgt durch Bestrahlung mit energiereichem Licht.

EP 0 458 502 offenbart eine Vielzahl unterschiedlichster Katalysatoren für Epoxyverbindungen. In der Auflistung findet sich auch das 1-Ethyl-2,3-dimethylimidazolium- acetat (R1= Ethyl, R2=Methyl und R3 = Methyl in Formel I) und 1-Ethyl-2,3-dimethylimidazolium - acetat- essigsäure komplex.

Geeignete latente Katalysatoren sollen mit den Epoxyverbindungen gut mischbar sein. Die Mischungen sollen bei Raumtemperatur und üblichen Lagerbedingungen möglichst lange Zeit stabil sein, so dass sie sich als lagerfähige 1 K Systeme eignen. Bei der Verwendung aber sollen die für die Härtung benötigten Temperaturen nicht allzu hoch sein, insbesondere sollen sie deutlich kleiner um 200 °C sein. Durch tiefere Härtungstemperaturen können Energiekosten eingespart werden und unerwünschte Nebenreaktionen vermieden werden. Trotz der niedrigeren Härtungstemperatur sollen die mechanischen und anwendungstechnischen Eigenschaften der gehärteten Systeme möglichst nicht schlechter werden. Gewünscht ist, das diese Eigenschaften (z.B. Härte, Flexibilität, Klebekraft etc) mindestens gleich gut sind oder sogar besser werden.

Aufgabe der vorliegenden Erfindung waren daher Imidazoliumsalze als latente Katalysatoren und Mischungen dieser Imidazoliumsalze und Epoxyverbindungen, welche die vorstehenden Anforderungen erfüllen.

Demgemäß wurde die oben definierte Verwendung der latenten Katalysatoren der Formel I und wurden Zusammensetzungen, welche die latenten Katalysatoren enthalten, gefunden.

### Zu den Imidazoliumsalzen

Erfindungsgemäß werden 1, 3 substituierten Imidazoliumsalze der Formel I, 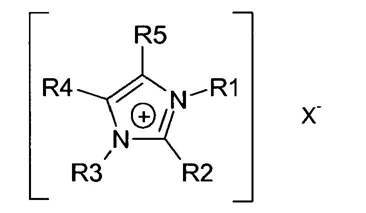 worin
R1 und R3 unabhängig voneinander für einen organischen Rest mit 1 bis 20 C-Atomen stehen
R2, R4,und R5 unabhängig voneinander für ein H-Atom oder für einen organischen Rest mit 1 bis 20 C-Atomen, insbesondere 1 bis 10 C-Atomen, stehen, wobei R4 und R5 auch zusammen einen aliphatischen oder aromatischen Ring ausbilden können, und
X für ein Dicyanamid -Anion steht, verwendet.
R1 und R3 stehen unabhängig voneinander vorzugsweise für einen organischen Rest mit 1 bis 10 C-Atomen. Der organische Rest kann auch noch weitere Heteroatome, insbesondere Sauerstoffatome, vorzugsweise Hydroxylgruppen, Ethergruppen, Estergruppen oder Carbonylgruppen enthalten.

Insbesondere stehen R1 und R3 unabhängig voneinander für einen Kohlenwasserstoffrest, der außer Kohlenstoff und Wasserstoff allenfalls noch Hydroxylgruppen, Ethergruppen, Estergruppen oder Carbonylgruppen enthalten kann.

R1 und R3 stehen bevorzugt unabhängig voneinander für einen Kohlenwasserstoffrest mit 1 bis 20 C- Atomen, insbesondere mit 1 bis 10 C-Atomen, der keine sonstigen Heteroatome, z.B. Sauerstoff oder Stickstoff, enthält. Der Kohlenwasserstoffrest kann aliphatisch (wobei auch ungesättigte aliphatische Gruppen eingeschlossen sind) oder aromatisch sein oder sowohl aromatische als auch aliphatische Gruppen enthalten.

Als Kohlenwasserstoffreste genannt seien z.B. die Phenylgruppe, Benzylgruppe, eine durch eine oder mehrere C1 bis C4 Alkylgruppen substituierte Phenylgruppe oder Benzylgruppe, Alkylgruppen und Alkenylgruppen, insbesondere die Allylgruppe.

Besonders bevorzugt stehen R1 und R3 unabhängig voneinander für eine C1 bis C10 Alkylgruppe, eine Allylgruppe oder eine Benzylgruppe. Als Alkylgruppe ist eine C1 bis C6 Alkylgruppe besonders bevorzugt, in einer besonderen Ausführungsform handelt es sich bei der Alkylgruppe um eine C1 bis C4 Alkylgruppe.

Ganz besonders bevorzugt stehen R1 und R3 unabhängig voneinander für eine Methyl-, Ethyl-, n-Propyl-, Isopropyl-, n-Butyl-, sec.Butyl oder tert.Butylgruppe, eine Allylgruppe oder eine Benzylgruppe, wobei die Methyl-, Ethyl-, n-Propyl- und n-Butylgruppe besondere Bedeutung haben.

In einer besonderen Ausführungsform stehen
R1 und R3 für eine Methylgruppe,
R1 und R3 für eine Ethylgruppe,
R1 für eine Methylgruppe und R3 für eine Ethylgruppe,
R1 für eine Methylgruppe und R3 für eine n Propylgruppe,
R1 für eine Methylgruppe und R3 für eine n Butylgruppe,
R1 für eine Methylgruppe und R3 für eine Allylgruppe,
R1 für eine Ethylgruppe und R3 für eine Allylgruppe,
R1 für eine Methylgruppe und R3 für eine Benzylgruppe,
R1 für eine Ethylgruppe und R3 für eine Benzylgruppe.

R2, R4,und R5 stehen unabhängig voneinander für ein H-Atom oder für einen organischen Rest mit 1 bis 20 C-Atomen stehen, wobei R4 und R5 auch zusammen einen aliphatischen oder aromatischen Ring ausbilden können. Der organische Rest kann neben Kohlenstoff und Wasserstoff auch Heteroatome wie Stickstoff oder Sauerstoff enthalten; vorzugsweise kann er Sauerstoff enthalten, insbesondere in Form von Hydroxylgruppen, Estergruppen, Ethergruppen oder Carbonylgruppen.

Insbesondere stehen R2, R4 und R5 unabhängig voneinander für ein H-Atom oder einen Kohlenwasserstoffrest, der außer Kohlenstoff und Wasserstoff allenfalls noch Hydroxylgruppen, Ethergruppen, Estergruppen oder Carbonylgruppen enthalten kann.

R2, R4 und R5 stehen bevorzugt unabhängig voneinander für ein Wasserstoffatom oder einen Kohlenwasserstoffrest mit 1 bis 20 C- Atomen, insbesondere mit 1 bis 10 C-Atomen, der keine sonstigen Heteroatome, z.B. Sauerstoff oder Stickstoff, enthält. Der Kohlenwasserstoffrest kann aliphatisch (wobei auch ungesättigte aliphatische Gruppen eingeschlossen sind) oder aromatisch sein oder sowohl aus aromatischen als auch aus aliphatischen Gruppen bestehen, wobei R4 und R5 auch einen aromatischen oder aliphatischen Kohlewasserstoffring ausbilden können, der gegebenenfalls durch weitere aromatische oder aliphatische Kohlenwasserstoffgruppen substituiert sein kann (die Anzahl der C-Atome des gegebenenfalls substituierten Kohlenwasserstoffrings einschließlich der Substituenten kann dabei vorzugsweise maximal 40, insbesondere maximal 20, besonders bevorzugt maximal 15 bzw. maximal 10 betragen).

Als Kohlenwasserstoffreste genannt seien z.B. die Phenylgruppe, eine Benzylgruppe, eine durch eine oder mehrere C1 bis C4 Alkylgruppen substituierte Phenylgruppe oder Benzylgruppe, Alkylgruppen, Alkenylgruppen und, im Falle, dass R4 und R5 einen Ring ausbilden, ein durch R4 und R5 ausgebildeter aromatischer 5 - oder 6 Ring, ein Cyclohexen - oder Cyclopenten, wobei diese Ringsysteme insbesondere durch eine oder mehrere C1 bis C10, insbesondere C1 bis C4 Alkylgruppen substituiert sein können.

Besonders bevorzugt stehen R2, R4 und R5 unabhängig voneinander für ein H-Atom, eine C1 bis C8 Alkylgruppe, eine C1-C8 Alkenylgruppe, z.B. eine Allygruppe, eine Phenylgruppe oder eine Benzylgruppe.

Ganz besonders bevorzugt stehen R2, R4 und R5 unabhängig voneinander für ein H-Atom, eine Methyl-, Ethyl-, n Propyl-, Isopropyl-, n Butyl-, sec.-Butyl oder tert.-Butylgruppe, wobei die Methyl-, Ethyl-, n Propyl- und n Butylgruppe besondere Bedeutung haben.

In einer besonderen Ausführungsform steht R2 unabhängig von den anderen Resten R 4 und R5 und den übrigen Resten R1 und R3 für ein H-Atom. Imidazoliumsalze der Formel I, in denen R2 für ein H Atom steht, sind im Rahmen der vorliegenden Erfindung besonders vorteilhaft, sie haben eine gute Löslichkeit in den Epoxyverbindungen und eine hohe Wirksamkeit als latenter Katalysator.

In einer besonderen Ausführungsform stehen
R2, R4 und R5 für ein H-Atom,
R2 für ein H-Atom oder eine C1 bis C4 Alkylgruppe und R4, R5 für ein H-Atom oder eine C1 bis C4 Alkylgruppe.

Als Einzelfälle für die Kationen der Verbindungen der Formel I seien genannt:
1-Butyl-3-methyl-imidazolium (R1= Butyl, R3 = Methyl)
1-Butyl-3-ethyl-imidazolium (R1=Butyl, R3=Ethyl)
1,3-Di-methyl-imidazolium (R1= Methyl, R3 =Methyl)
1-Ethyl-3-methyl-imidazolium (R1=Ethyl, R3 =Methyl)
1-Ethyl-2,3 dimethyl- imidazolium (R1 =Ethyl, R2=Methyl, R3=Methyl)

X steht für ein Dicyanamid -Anion. Das Dicyanamid-Anion hat die Strukturformel

(N≡C-N-C≡N)⁻.

Imidazoliumsalze der Formel I sind im Handel, z.B. von den Firmen BASF, Sigma Aldrich oder Merck erhältlich. Die Anionen der erhältlichen Salze können, wenn gewünscht leicht durch Ionenaustausch durch andere Anionen ersetzt werden.

### Zu den Epoxyverbindungen

Die härtbare Zusammensetzung enthält Epoxyverbindungen. In Betracht kommen insbesondere Epoxyverbindungen mit 1 bis 10 Epoxygruppen, vorzugsweise mit mindestens 2 Epoxygruppen.

Besonders bevorzugt enthält die härtbare Zusammensetzung Epoxyverbindungen mit 2 bis 6, ganz besonders bevorzugt mit 2 bis 4 und insbesondere mit 2 Epoxygruppen.

Bei den Epoxygruppen handelt es sich insbesondere um Glycidylethergruppen, wie sie bei der Umsetzung von Alkoholgruppen mit Epichlorhydrin entstehen.

Bei den Epoxyverbindungen kann es sich um niedermolekulare Verbindungen, welche im allgemeinen ein mittleres Molgewicht Mn kleiner 1000 g/mol haben oder um höhermolekulare Verbindungen (Polymere) handeln. Es kann sich um aliphatische, auch cycloaliphatische Verbindungen oder um Verbindungen mit aromatischen Gruppen handeln.

Insbesondere handelt es sich bei den Epoxyverbindungen um Verbindungen mit zwei aromatischen oder aliphatischen 6-Ringen oder deren Oligomere.

Technisch von Bedeutung sind Epoxyverbindungen, die durch Umsetzung des Epichlorhydrins mit Verbindungen, welche mindestens zwei reaktive H-Atome haben, insbesondere mit Polyolen, erhältlich sind.

Technisch von besonderer Bedeutung sind Epoxyverbindungen, die durch Umsetzung des Epichlorhydrins mit Verbindungen, welche mindestens zwei, vorzugsweise zwei Hydroxylgruppen und zwei aromatische oder aliphatische 6-Ringe enthalten, erhältlich sind; als derartige Verbindungen genannt sei insbesondere Bisphenol A und Bisphenol F, sowie hydriertes Bisphenol A und Bisphenol F.

In Betracht kommen auch Umsetzungsprodukte des Epichlorhydrins mit anderen Phenolen, z.B. mit Kresolen oder Phenol-aldehyd-adukten, wie Phenolformaldehydharzen, insbesondere Novolaken.

Es sind natürlich auch Epoxyverbindungen geeignet, welche ihre Epoxyverbindungen nicht vom Epichlorhydrin ableiten. In Betracht kommen z.B.Epoxyverbindungen, welche Epoxgruppen durch Umsetzung mit Glycidyl (meth)acrylat), z.B. radikalische Copolymerisation mit Glycidyl (meth)acrylat, enthalten. Genannt sei in diesem Zusammenhang auch ERL-4221 von Dow (CAS Nummer 2386-87-0):

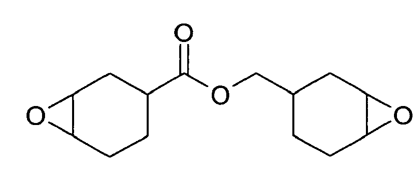

Für die Verwendung der Zusammensetzungen sind insbesondere bei Verarbeitungstemperaturen von 20 bis 100°C, besonders bevorzugt bei 20 bis 40°C, ganz besonders bevorzugt bei 20°C flüssige Epoxyverbindungen geeignet.

### Zu sonstigen Bestandteilen der Zusammensetzungen

Die erfindungsgemäße Zusammensetzung kann neben dem latenten Katalysator und der Epoxyverbindung weitere Bestandteile enthalten.

Die Zusammensetzung eignet sich für 1 K-systeme oder auch als lagerfähige Komponente für 2 K-systeme.

Bei 2 K-systemen wird erst kurz vor der Verwendung eine zweite, sehr reaktive Komponente hinzugegeben; nach Zugabe der 2. Komponenten ist die erhaltenen Mischung nicht mehr lagerstabil, weil die Vernetzungsreaktion bzw. Härtung einsetzt und zu einem Viskositätsanstieg führt.

1 K-Systeme enthalten bereits alle notwendigen Bestandteile, sie sind lagerstabil.

Die nachstehenden Ausführungen zur Zusammensetzung gelten sowohl für 1 K- als auch auf 2 K-Systeme, falls im Einzelfall nichts anderes gesagt wird.

Neben den Epoxyverbindungen kann die Zusammensetzung weitere reaktive oder nicht reaktive Bestandteile enthalten.

In Betracht kommen z.B. Phenolharze; unter dem Begriff Phenolharze werden hier Kondensationsprodukte von Phenol oder Derivaten des Phenols, z.B. o-, m- oder p-Kresol, und Aldehyden oder Ketonen, insbesondere Formaldehyd, verstanden. Als Phenolharze besonders geeignet sind Resole und insbesondere sog. Novolake, dabei handelt es sich um Phenolharze, welche durch saure Kondensation von Phenol oder Kresolen mit Formaldehyd erhältlich sind, insbesondere mit einem molaren Überschuss des Phenols. Die Novolake sind vorzugsweise in Alkoholen oder Aceton löslich.

In Betracht kommen auch Anhydrid-vernetzer wie z.B. Phthalsäureanhydrid, Trimellitsäureanhydrid, Benzophenontetracarbonsäure-dianhydrid, Tetrahydrophthalsäureanhydrid, Hexahydrophthalsäureanhydrid, 4-Methyl-tetrahydrophthalsäureanhydrid, 3-Methyl-tetrahydrophthalsäureanhydrid, 4-Methyl-hexahydrophthalsäureanhydrid oder 3-Methyl-hexahydrophthalsäureanhydrid.

Die Phenolharze und Anhydridhärter vernetzen mit Epoxverbindungen in Form einer Polyaddition. Auch diese Polyadditionsreaktion, insbesondere die Polyadditionsreaktion der Epoxyverbindungen mit dem Phenolharz, wird mit dem Imidazoliumsalz der Formel I beschleunigt.

Besonders geeignet sind daher auch erfindungsgemäße Zusammensetzungen, die neben dem Imidazoliumsalz der Formel I, der Epoxyverbindung auch noch mindestens ein Phenolharz, vorzugsweise einen Novolak enthalten.

Als nicht-reaktive Bestandteile seien Harze genannt, die keine weitere Vernetzungsreaktion eingehen, sowie anorganische Füllstoffe oder Pigmente.

Die Zusammensetzung kann auch Lösemittel enthalten. In Betracht kommen gegebenenfalls organische Lösemittel, um gewünschte Viskositäten einzustellen.

In einer bevorzugten Ausführungsform enthält die Zusammensetzung Lösemittel allenfalls in untergeordneten Mengen (kleiner 20 Gew.-Teile, insbesondere kleiner 10 bzw. kleiner 5 Gew.-Teile auf 100 Gew.-Teile Epoxyverbindung) und besonders bevorzugt kein Lösemittel (100 % system).

Bevorzugte Zusammensetzungen bestehen zu mindestens 30 Gew.-%, vorzugsweise zu mindestens 50 Gew.-%, ganz besonders bevorzugt zu mindestens 70 Gew.-% aus Epoxyverbindungen. (abgesehen von ggf. mitverwendeten Lösemitteln).

Der Gehalt des Imidazoliumsalzes der Formel I beträgt vorzugsweise 0,01 bis 10 Gew.-Teile auf 100 Gew.-Teile Epoxyverbindung, besonders bevorzugt beträgt er mindestens 0,1, insbesondere mindestens 0,5 und ganz besonders bevorzugt mindestens 1 Gew.-Teil auf 100 Gew.-Teile Epoxyverbindung; vorzugsweise ist der Gehalt nicht höher als 8 Gew. Teile, insbesondere nicht höher als 6 Gew. Teile auf 100 Gew.-Teile Epoxyverbindung, insbesondere kann der Gehalt z.B. auch 1 bis 6 oder 3 bis 5 Gew.-Teile auf 100 Gew.-Teile Epoxyverbindung betragen.

Neben den Imidazoliumsalzen der Formel I kann die Zusammensetzung natürlich auch weitere, bisher bereits bekannte latente Katalysatoren enthalten, z.B. Addukte des Bortrifluorids an Aminen (BF3-Monoethylamin), quaternäre Phosphoniumverbindungen oder Dicyandiamid (DICY).). Unter stickstoffhaltigen Bestandteilen als Härter sind zu verstehen, aromatische und aliphatische Polyamine wie N-Aminoethylpiperazin, Polyethylenamin, insbesondere aromatische und aliphatische Diamine, wie Isophorondiamin, Tolylendiamin, Xylylendiamin insbesondere meta-Xylylendiamin, 4,4'-Methylen-dianilin, Ethylendiamin, 1,2-Propandiamin, 1,3-Propandiamin, Piperazin, 4,4'-Diamino-dicyclohexylmethan, 3,3'-Dimethyl-4,4'-diamino-dicyclohexylmethan, Neopentandiamin, 2,2'-Oxybis(ethylamine), Hexamethylendiamin, Octamethylendiamin, 1,12-Diamino-dodecan, 1,10-Diamino-decan, Norbornan-diamine, Menthene-diamine, 1,2-Diaminocyclohexan, 1,3-Bis(aminomethyl)cyclohexan, 1-Methyl-2,4-diaminocyclohexan, Polyetheramine wie Amine auf Basis von Ethylenoxid, Butylenoxid, Pentylenoxid oder Mischungen dieser Alkylenoxide mit Propylenoxid mit Ammoniak, 4,7,10-Trioxatridecane-1,3-diamine, 4,7,10-Trioxa-1,13-tridecanediamine, XTJ-568 von Huntsman, 1,8-Diamino-3,6-dioxaoctane (XTJ 504 von Huntsman), 1,10-Diamino-4,7-dioxadecane (XTJ 590 von Huntsman), 4,9-Dioxadodecan-1,12-diamin (von BASF), 4,7,10-Trioxateridecane-1,3-diamine (von BASF), XTJ 566 von Huntsman, Polyetheramine auf Basis von Ammoniak, Propylen- und Ethylenoxid wie XTJ 500, XTJ, 501, XTJ 511 von Huntsman, Polyetheramine auf Basis von poly(1,4-Butandiol) bzw. Poly(THF), Propylenoxid und Ammoniak: XTJ 542, XTJ 559 von Huntsman, Polyetheramin T 403, Polyetheramin T 5000, wobei Triethylentetraamin und Diethylentriamin, Polyetheramin auf Basis von Propylenoxid mit Ammoniak ausgenommen sind.

Ausgewählte Beispiele für weitere stickstoffhaltige Bestandteile sind substituierte Imidazole wie 1-Methylimidazol, 2-Phenylimidazol, 1-Cyanoethylimidazol, Imidazoline wie 2-Phenyl-imidazolin, tertiäre Amine wie N,N-Dimethyl-benzylamin, DMP 30 (2,4,6-Tris-(dimethylaminomethyl)-phenol, DABCO (1,4-Diazabicyclo[2,2,2]octan), Ketimine wie Epi-Cure 3502, Polyamidoamine wie Versamid® 140 von Cognis, Urone wie 3-(4-chlorophenyl)-1,1-dimethyl-harnstoff (Monuron), 3-(3,4-dichlorophenyl)-1,1-dimethylharnstoff (Diuron), 3-phenyl-1,1-dimethylharnstoff (Fenuron), 3-(3-chloro-4-methylphenyl)-1,1-dimethyl-harnstoff (Chlorotoluron), Tolyl-2,4 bis(N,Ndimethylcarbamid) Amicure UR2T (Air Products), Tetraalkyl-guanidine wie N,N,N',N'-Tetramethylguanidin, Reaktionsprodukte von DICY mit Aminen, so genannte Biguanidine wie HT 2844 von Vantico.

Die Zusammensetzung ist vorzugsweise bei Verarbeitungstemperaturen von 20 bis 100°C, besonders bevorzugt bei 20 bis 40°C, ganz besonders bevorzugt bei 20°C flüssig.

Die Zunahme der Viskosität der gesamten Zusammensetzung bei Temperaturen bis zu 50°C ist über einen Zeitraum von 10 Stunden, insbesondere von 100 Stunden (ab Zugabe des latenten Katalysators) kleiner als 20 %, besonders bevorzugt kleiner als 10 %, ganz besonders bevorzugt kleiner 5 %, insbesondere kleiner 2 % bezogen auf die Viskosität der Zusammensetzung ohne den latenten Katalysator bei 21 °C, 1 bar.

Die vorstehende Zusammensetzung eignet sich als 1 K-System.

Sie eignet sich auch als lagerfähige Komponente eines 2 K-systems.

Im Fall der 2 K- Systeme werden lediglich hoch reaktive Komponenten, z.B. übliche, sehr reaktive Amin-härter oder reaktive Anhydridhärter vor der Verwendung zugesetzt, danach setzt die Härtung, erkennbar an einem Viskositätsanstieg ein.

In Betracht kommen z.B. reaktive Polyamine oder Polyanhydride, welche üblicherweise als Vernetzer für Epoxyverbindungen in 2 K- Systemen verwendet werden. Bekannte Aminvernetzer sind insbesondere aliphatische Polyamine wie Diethylentriamin Triethylentetra-amin oder Amine auf Basis von Propylenoxid und Ammoniak (Polyetheramine, wie D 230, D 2000, D 400).

### Zur Härtung und Verwendung

Die Zusammensetzungen, welche Imidazoliumsalze der Formel I enthalten, sind lagerstabil. Die Imidazoliumsalze der Formel I sind gut in den Epoxyverbindungen und in den erfindungsgemäßen Zusammensetzungen löslich. Die Imidazoliumsalze der Formel I sind in den Zusammensetzungen als latente Katalysatoren wirksam. Ihre Effektivität bei der Polymerisation oder Vernetzung der Epoxyverbindungen ist sehr gut.

Bei üblichen Lagertemperaturen unter 40°C, insbesondere unter 30°C ist ein Anstieg der Viskosität der Zusammensetzungen nicht oder kaum zu beobachten. Die Zusammensetzungen eignen sich daher als 1 K- Systeme. 1 K-Systeme benötigen vor der Verwendung nicht den Zusatz einer 2. Komponenten, welche eine Härtung oder Vernetzung bewirkt.

Die Zusammensetzungen eignen sich natürlich auch als lagerfähige Komponente für 2 K-Systeme (s.o.).

Die Härtung der Zusammensetzungen als 1 K-system oder auch als 2 K-system kann bei geringeren Temperaturen erfolgen als es mit den bisher bekannten latenten Imidazolium-Katalysatoren möglich war. Die Härtung kann bei Normaldruck und bei Temperaturen kleiner 250°C, insbesondere bei Temperaturen kleiner 200°C, vorzugsweise bei Temperaturen kleiner 175°C, besonders bevorzugt bei Temperaturen kleiner 150°C und ganz besonders bevorzugt bei Temperaturen kleiner 125°C und sogar kleiner 100°C erfolgen. Möglich ist auch eine Härtung bei Temperaturen kleiner 80°C. Die Härtung kann insbesondere in einem Temperaturbereich von 40 bis 175°C, insbesondere von 60 bis 150°C, bzw. von 60 bis 125°C erfolgen.

Die erfindungsgemäßen Zusammensetzungen eignen sich als Beschichtungs- oder Imprägnierungsmittel, als Klebstoff, als Verbundwerkstoff, zur Herstellung von Formkörpern oder als Gießmassen zur Einbettung, Anbindung oder Verfestigung von Formkörpern. Dies und die nachstehenden Ausführungen dazu gelten sowohl für die 1 K - als auch für 2 K- Systeme, bevorzugte Systeme sind bei allen genannten Verwendungen die 1 K-Systeme.

Als Beschichtungsmittel seien z.B. Lacke genannt. Insbesondere können mit den erfindungsgemäßen Zusammensetzungen (1 K oder 2 K) kratzfeste Schutzlacke auf beliebigen Substraten, z.B. aus Metall, Kunststoff oder Holzwerkstoffen erhalten werden. Die Zusammensetzungen eignen sich auch als Isolierbeschichtungen in elektronischen Anwendungen, z.B. als Isolierbeschichtung für Drähte und Kabel. Genannt sei auch die Verwendung zur Herstellung von Photoresisten. Sie eignen sich insbesondere auch als Reparaturlack, z.B. auch bei der Ausbesserung von Rohren ohne Demontage der Rohre (cure in place pipe (CIPP) rehabilitation). Sie eignen sich auch zur Versiegelung von Fußböden.

Als Klebstoffe seien 1 K oder 2 K- Strukturklebstoffe erwähnt. Strukturklebstoffe dienen zur dauerhaften Verbindung von Formteilen miteinander. Die Formteile können aus beliebigem Material sein; in Betracht kommen Materialien aus Kunststoff, Metall, Holz, Leder, Keramik etc. Es kann sich dabei auch um Schmelzklebstoffe (hot melt adhesives) handeln, die erst bei höherer Temperatur fließfähig und verarbeitbar sind. Es kann sich auch um Fußbodenklebstoffe handeln. Die Zusammensetzungen eignen sich auch als Klebstoffe für die Herstellung von Leiterplatten (electronic curcuits), insbesondere auch nach der SMT Methode (surface mounted technology).

In Verbundwerkstoffen (Composites) sind unterschiedliche Materialien, z.B. Kunststoffe und Verstärkungsmaterialien (Fasern, Carbonfasern) miteinander verbunden.

Die Zusammensetzungen eignen sich z.B. zur Herstellung von vorimprägnierter Fasern, z.B. Prepregs und ihrer weiteren Verarbeitung zu Verbundwerkstoffen.

Als Herstellverfahren für Verbundwerkstoffe seien die Härtung von vorimprägnierten Fasern oder Fasergeweben (z.B. Prepregs) nach Lagerung oder aber die Extrusion, Strangziehen (pultrusion), Wickeln (winding) und resin transfer molding (RTM), resin infusion technologies (RI) genannt.

Insbesondere können die Fasern mit der erfindungsgemäßen Zusammensetzung getränkt werden und danach bei einer höheren Temperatur gehärtet werden. Während der Tränkung und gegebenenfalls einer anschließenden Lagerung setzt noch keine oder nur eine geringfügige Härtung ein.

Als Gießmassen zur Einbettung, Anbindung oder Verfestigung von Formkörpern werden die Zusammensetzungen z.B. in elektronischen Anwendungen eingesetzt. Sie eignen sich als Flip-chip underfill oder als Elektrogießharze für potting, casting und (glob-top-) encapsulation.

### Beispiele

### Einsatzstoffe

Als Epoxyverbindung wurde der Diglycidylether von Bisphenol A (kurz DGEBA) verwendet, erhältlich als Handelsprodukt von Nan Ya unter der Bezeichnung NPEL 127H.

### Untersuchte Zusammensetzungen

Es wurden jeweils 5 Gew. Teile des Imidazoliumsalzes oder eines Gemisches von Imidazoliumsalzen mit 100 Gew. Teilen der Epoxyverbindung gemischt. In Tabelle 1 sind die Zusammensetzungen und Ergebnisse aufgelistet. In den Fällen von 1^{x} und 1^{xx} wurden auch Mischungen mit weiteren Bestandteilen geprüft (siehe Fußnote unter Tabelle 2).

### Messmethoden

Das Einsetzen und der Ablauf der Härtung wurde mit der Differential Scanning Kalorimetrie (DSC) untersucht. Dazu wurden 5 bis 15 Milligramm der Zusammensetzung wurden in einem DSC Kalorimeter (DSC 822, Mettler Toledo) aufgeheizt mit einer konstanten Geschwindigkeit von 10°C/min.

Bestimmt wurden To (Beginn der exothermen Polymerisationsreaktion, onset temperature, Tmax (Temperaturmaximum des exothermen Peaks, entspricht der maximalen Reaktionsbeschleunigung) und ΔH (Integral der DSC Kurve, entspricht der gesamten freigewordenen Wärmemenge der Polymerisationsreaktion).

Zusätzlich wurde die Glasübergangstemperatur (Tg) der gehärteten, durchreagierten Probe wie folgt durch DSC Messung bestimmt:
20g der ungehärteten Zusammensetzung wurden mit einer Filmdicke von 3 bis 4 mm in ein Aluminiumpfännchen gegeben und eine Stunde bei 160°C, gefolgt von 3 weiteren Stunden bei 180°C und abschließend einer weiteren Stunde bei 200°C gehärtet. Die Tg der gehärteten Probe wurde durch DSC Messung mit einer Aufheizrate von 30°C/min als Mittelwert von drei unabhängigen Messungen bestimmt.

Die Lagerstabilität (Topfzeit) wurde durch Messung der relativen Viskosität (GEL-NORM®-RVN Viscosimeter) überprüft. Bei unterschiedlichen Temperaturen (25°C, 80°C, 100°C und 120°C wurde die Zeit in Tagen (d) oder Minuten (min) bestimmt. Die angegebene Zeit ist die Zeit, nach der die Mischung noch gießfähig ist.

**Tabelle 1: Imidazoliumsalze, physikalische Eigenschaften**

| Salz Nr. | Imidazoliumkation | Anion |
|---|---|---|
| 1 | 1-Butyl-3-methyl-imidazolium | Dicyanamid |
| 2 | 1,3-Di-methyl-imidazolium | Dicyanamid |
| 3 | 1-Ethyl-3-methyl-imidazolium | Dicyanamid |
| 4 | 1-Ethyl-2,3-dimethyl-imidazolium | Dicyanamid |
| V1 | 1-Butyl-3-methyl-imidazolium | Chlorid |
| V2 | 1-Ethyl-3-methyl-imidazolium | Methansulfonat |

**Tabelle 2: Ergebnisse der DSC Messung und Lagerstabilität**

| Salz Nr | To (°C) | Tmax (°C) | ΔH (J/g) | Tg (°C) | Lagerstabilität 25°C (d) | Lagerstabilität 100°C (min) | Lagerstabilität 120°C (min) |
|---|---|---|---|---|---|---|---|
| 1 | 133 | 183 | 564 | 146 | >30 | 180 | |
| 2 | 137 | 181 | 568 | n.b. | >30 | 183 | |
| 3 | 134 | 182 | 579 | 135 | 40 | 166 | 48 |
| 4 | 164 | 176 | 463 | 148 | >30 | 170 | |
| 5^{x} | 136 | 165 | 270 | 157 | | | 19,2 |
| 6^{xx} | 148 | 162 | 310 | 156 | | | 19,3 |
| V1 | 192 | 245 | 518 | 104 | >20 | >300 | |
| V2 | 280 | 315 | 418 | n.b. | n.b. | >300 | |

| | | | | | | | |
|---|---|---|---|---|---|---|---|
| n.b.: nicht bestimmt | | | | | | | |

5^{x} Die geprüfte Mischung enthielt auch den Anydrid-Härter MHHPSA (Methylhexahydrophthalsäureanhydrid),
Mol - verhältnis Epoxid : Anydrid 1 : 0,9,
1 Gew.-Teil Imidazoliumsalz auf 100 Gew.-Teile Epoxid
Härtungsbedingungen : 3 Stunden bei 100°C und 2 Stunden bei 150°C

6^{xx} Die geprüfte Mischung enthielt auch den Novolak PHS 6000 IZ04 der Hexion Specialty GmbH.
Molverhältnis Epoxid : Hydroxy 1 : 0,9,
1 Gew.-Teil Imidazoliumsalz auf 100 Gew.-Teile Epoxid + Novolack
Härtungsbedingungen : 2 Stunden bei 140°C und 2 Stunden bei 100°C

**Tabelle 3: Einfluss der Konzentration des Imidazoliumsalzes am Beispiel 1-Ethyl-3-methylimidazoliumdicyanamid**

| Gew.-Teile Imidazolium auf 100 Gew.-Teile Epoxid | To (°C) | Tmax (°C) | ΔH (J/g) | Tg (°C) | Lager-stabilität 25°C (d) | Lager-stabilität 120°C (min) |
|---|---|---|---|---|---|---|
| 5 | 134 | 182 | 579 | 135 | 60 | 48 |
| 3 | 136 | 185 | 551 | 136. | 60 | 67 |
| 2 | 141 | 191 | 396 | 141 | >60 | 111 |
| 1 | 147 | 194 | 86 | n.b. | >60 | n.b. |

## Patentansprüche

1. Verwendung von 1, 3 substituierten Imidazoliumsalzen der Formel I 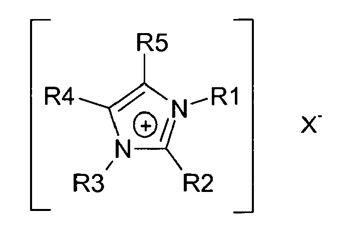 worin
R1 und R3 unabhängig voneinander für einen organischen Rest mit 1 bis 20 C-Atomen stehen
R2, R4,und R5 unabhängig voneinander für ein H-Atom oder für einen organischen Rest mit 1 bis 20 C-Atomen stehen, wobei R4 und R5 auch zusammen einen aliphatischen oder aromatischen Ring ausbilden können, und
X für ein Dicyanamid -Anion steht
als latenter Katalysator für die Härtung von Epoxyverbindungen enthaltenden Zusammensetzungen.

2. Verwendung gemäß Anspruch 1, **dadurch gekennzeichnet, dass** R1 und R3 unabhängig voneinander für eine C1 bis C10 Alkylgruppe, eine Allylgruppe oder eine Benzylgruppe stehen.

3. Verwendung gemäß Anspruch 1 oder 2, **dadurch gekennzeichnet, dass** R2, R4 und R5 unabhängig voneinander für ein H-Atom oder eine C1 bis C8 Alkylgruppe, eine C1 bis C8 Alkenylgruppe, insbesondere eine Allylgruppe, eine Phenylgruppe oder eine Benzylgruppe stehen.

4. Verwendung gemäß einem der Ansprüche 1 bis 3, **dadurch gekennzeichnet, dass** R2 für ein H-Atom steht.

5. Verwendung gemäß einem der Ansprüche 1 bis 4, **dadurch gekennzeichnet, dass** die härtbare Zusammensetzung Epoxyverbindungen mit mindestens 2 Epoxygruppen enthält.

6. Verwendung gemäß einem der Ansprüche 1 bis 5, **dadurch gekennzeichnet, dass** die härtbare Zusammensetzung Epoxyverbindungen mit im Mittel 2 Epoxygruppen enthält.

7. Verwendung gemäß einem der Ansprüche 1 bis 6, **dadurch gekennzeichnet, dass** die Zusammensetzung Epoxyverbindungen enthält, die durch Umsetzung von Epichlorhydrin mit Alkoholen erhältlich sind.

8. Verwendung gemäß einem der Ansprüche 1 bis 7, **dadurch gekennzeichnet, dass** die Zusammensetzung zu mindestens 30 Gew.-%, vorzugsweise zu mindestens 50 Gew.-% aus Epoxyverbindungen besteht, abgesehen von Wasser und organischen Lösemitteln.

9. Verwendung gemäß einem der Ansprüche 1 bis 8, **dadurch gekennzeichnet, dass** die Zusammensetzung zusätzlich weitere Bestandteile, z.B. Anhydrid-härter oder Phenolharze, insbesondere Novolake, enthält.

10. Verwendung gemäß einem der Ansprüche 1 bis 9, **dadurch gekennzeichnet, dass** der Gehalt des latenten Katalysators 0,01 bis 10 Gew.-Teile auf 100 Gew.-Teile Epoxyverbindung beträgt.

11. Härtbare Zusammensetzungen, enthaltend Epoxyverbindungen und einen latenten Katalysator der Formel I.

12. Härtbare Zusammensetzung nach Anspruch 11, **dadurch gekennzeichnet, dass** sie DICY und/oder Aminvernetzer enthält.

13. Härtbare Zusammensetzung nach einem der Ansprüche 11 bis 12, **dadurch gekennzeichnet, dass** sie stickstoffhaltige Bestandteile als Härter enthält.

14. Härtbare Zusammensetzung nach Anspruch 13, **dadurch gekennzeichnet, dass** sie eine bei Raumtemperatur flüssige und homogene Mischung von DICY in den Imidazoliumsalzen enthält.

15. Härtbare Zusammensetzungen gemäß einem der Ansprüche 11-14 **dadurch gekennzeichnet, dass** sie zu mindestens 30 Gew.-% aus Epoxyverbindungen bestehen, abgesehen von Wasser und organischen Lösemitteln.

16. Verfahren zur Härtung von Zusammensetzungen gemäß einem der Ansprüche 11 bis 14 **dadurch gekennzeichnet, dass** die Härtung bei Temperaturen kleiner 200°C erfolgt.

17. Verwendung von härtbaren Zusammensetzungen gemäß einem der Ansprüche 11 bis 14 als Beschichtungs- oder Imprägnierungsmittel, als Klebstoff, in Verbundwerkstoffen, zur Herstellung von Formkörpern oder als Gießmassen zur Einbettung, Anbindung oder Verfestigung von Formkörpern.

18. Verwendung von härtbaren Zusammensetzungen gemäß einem der Ansprüche 11-14 zur Herstellung von Verbundwerkstoffen durch die Härtung von vorimprägnierten Fasern oder Fasergeweben oder durch Extrusion, Strangziehen, Wickeln, und resin transfer molding, resin infusion technologies.

## Claims

1. The use of 1,3-substituted imidazolium salts of the formula I 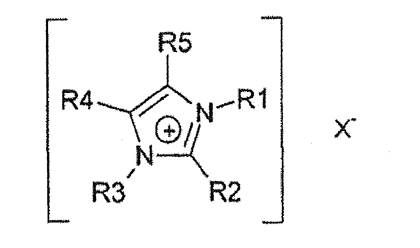 in which
R1 and R3 independently of one another are an organic radical having 1 to 20 C atoms,
R2, R4 and R5 independently of one another are an H atom or an organic radical having 1 to 20 C atoms, it also being possible for R4 and R5 together to form an aliphatic or aromatic ring, and
X is a dicyanamide anion,
as latent catalysts for curing a composition comprising epoxy compounds.

2. The use according to claim 1, wherein R1 and R3 independently of one another are a C1 to C10 alkyl group, an allyl group or a benzyl group.

3. The use according to claim 1 or 2, wherein R2, R4 and R5 independently of one another are an H atom or a C1 to C8 alkyl group, a C1 to C8 alkenyl group, more particularly an allyl group, a phenyl group or a benzyl group.

4. The use according to any one of claims 1 to 3, wherein R2 is an H atom.

5. The use according to any one of claims 1 to 4, wherein the curable composition comprises epoxy compounds having at least 2 epoxy groups.

6. The use according to any one of claims 1 to 5, wherein the curable composition comprises epoxy compounds having on average 2 epoxy groups.

7. The use according to any one of claims 1 to 6, wherein the composition comprises epoxy compounds obtainable by reacting epichlorohydrin with alcohols.

8. The use according to any one of claims 1 to 7, wherein the composition is composed of at least 30% by weight, preferably at least 50% by weight, of epoxy compounds, in addition to water and organic solvents.

9. The use according to any one of claims 1 to 8, wherein the composition further comprises additional ingredients, examples being anhydride curing agents or phenolic resins, more particularly novolaks.

10. The use according to any one of claims 1 to 9, wherein the amount of the latent catalyst is 0.01 to 10 parts by weight per 100 parts by weight of epoxy compound.

11. A curable composition comprising epoxy compounds and a latent catalyst of the formula I.

12. The curable composition according to claim 11, which comprises DICY and/or amine crosslinkers.

13. The curable composition according to either of claims 11 and 12, which comprises nitrogen-containing constituents as curing agents.

14. The curable composition according to claim 13, which comprises a mixture of DICY in the imidazolium salts which is homogeneous and liquid at room temperature.

15. The curable composition according to any one of claims 11-14, composed of at least 30% by weight of epoxy compounds, in addition to water and organic solvents.

16. A method of curing a composition according to any one of claims 11 to 14, wherein the curing takes place at temperatures less than 200°C.

17. The use of a curable composition according to any one of claims 11 to 14 as a coating or impregnating composition, as an adhesive, in composite materials, for producing shaped articles or as a casting compound for embedding, attaching or solidifying shaped articles.

18. The use of a curable composition according to any one of claims 11-14 for producing composite materials by the curing of preimpregnated fibers or woven fiber fabrics or by extrusion, pultrusion, winding, resin transfer molding or resin infusion technologies.

## Revendications

1. Utilisation de sels d'imidazolium substitués en 1, 3 de formule I 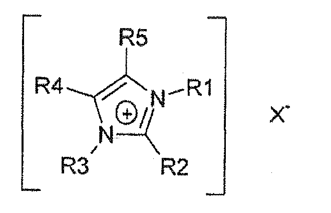 dans laquelle
R1 et R3 représentent, indépendamment l'un de l'autre, un radical organique ayant de 1 à 20 atomes de carbone
R2, R4 et R5 représentent, chacun indépendamment, un atome d'hydrogène ou un radical organique ayant de 1 à 20 atomes de carbone, R4 et R5 pouvant également former ensemble un cycle aliphatique ou aromatique , et
X représente un anion dicyanamide
en tant que catalyseur latent pour le durcissement de compositions contenant des composés époxy.

2. Utilisation selon la revendication 1, **caractérisée en ce que** R1 et R3 représentent, indépendamment l'un de l'autre, un groupe alkyle en C₁-C₁₀, un groupe allyle ou un groupe benzyle.

3. Utilisation selon la revendication 1 ou 2, **caractérisée en ce que** R2, R4 et R5 représentent, chacun indépendamment, un atome d'hydrogène ou un groupe alkyle en C₁-C₈, un groupe alcényle en C₁-C₈, en particulier un groupe allyle, un groupe phényle ou un groupe benzyle.

4. Utilisation selon l'une quelconque des revendications 1 à 3, **caractérisée en ce que** R2 représente un atome d'hydrogène.

5. Utilisation selon l'une quelconque des revendications 1 à 4, **caractérisée en ce que** la composition durcissable contient des composés époxy comportant au moins 2 groupes époxy.

6. Utilisation selon l'une quelconque des revendications 1 à 5, **caractérisée en ce que** la composition durcissable contient des composés époxy comportant en moyenne 2 groupes époxy.

7. Utilisation selon l'une quelconque des revendications 1 à 6, **caractérisée en ce que** la composition contient des composés époxy qui peuvent être obtenus par mise en réaction d'épichlorhydrine avec des alcools.

8. Utilisation selon l'une quelconque des revendications 1 à 7, **caractérisée en ce que** la composition consiste à raison d'au moins 30 % en poids, de préférence d'au moins 50 % en poids en composés époxy, abstraction faite de l'eau et de solvants organiques.

9. Utilisation selon l'une quelconque des revendications 1 à 8, **caractérisée en ce que** la composition contient en outre d'autres composants, par exemple des durcisseurs de type anhydride ou des résines phénoliques, en particulier des novolaques.

10. Utilisation selon l'une quelconque des revendications 1 à 9, **caractérisée en ce que** la teneur en catalyseur latent va de 0,01 à 10 parties en poids, pour 100 parties en poids de composé époxy.

11. Composition durcissable, contenant des composés époxy et un catalyseur latent de formule I.

12. Composition durcissable selon la revendication 11, **caractérisée en ce qu'**elle contient du DICY (dicyanodiamide) et/ou des agents de réticulation de type amine.

13. Composition durcissable selon la revendication 11 ou 12, **caractérisée en ce qu'**elle contient comme durcisseur des composants azotés.

14. Composition durcissable selon la revendication 13, **caractérisée en ce qu'**elle contient un mélange, liquide et homogène à la température ambiante, de DICY dans les sels d'imidazolium.

15. Compositions durcissables selon l'une quelconque des revendications 11 à 14, **caractérisées en ce qu'**elles consistent à raison d'au moins 30 % en poids en composés époxy, abstraction faite de l'eau et des solvants organiques.

16. Procédé pour le durcissement de compositions selon l'une quelconque des revendications 11 à 14, **caractérisé en ce que** le durcissement s'effectue à des températures inférieures à 200 °C.

17. Utilisation de compositions durcissables selon l'une quelconque des revendications 11 à 14, en tant que produit de revêtement ou d'imprégnation, comme adhésif, dans des matériaux composites, pour la production de corps moulés ou en tant que matières à couler pour l'enrobage, l'assemblage ou le renforcement de corps moulés.

18. Utilisation de compositions durcissables selon l'une quelconque des revendications 11 à 14, pour la production de matériaux composites par le durcissement de fibres préimprégnées ou de tissus de fibres préimprégnés ou par extrusion, tirage, enroulage et resin transfer molding, resin infusion technologies (moulage par transfert, injection de résine).
